# EUROPEAN PATENT APPLICATION

(11) **EP 1 203 802 A1**
(43) Date of publication of application: **08.05.2002**
(21) Application number: 00203833.9
(22) Date of filing: 02.11.2000
(51) Int. Cl.: C10J 3/26

(54) **Biomass gasifier**

(71) Applicant: Registrar, Indian Institute of Science, Karnataka (IN)
(72) Inventor: Mukunda, Hanasogo Suryanarayana Avadhany, Bangalore 560 012, Karnataka (IN); Paul, Palakat Joseph, Jalahalli, Bangalore 560 013, Karnataka (IN); Dasappa, Srinivasaiah, Bangalore 560010, Karnataka (IN); Rajan, Nagamangala Krishnalyengar Sriranga, Malleswaram, West Banagalore 560 055 (IN); Sridhar, Gururaja Rao, Bangalore 560 079, Karnataka (IN); Sridhar, Hunasenahalli Venkatesharao, Bangalore 560 086, Karnataka (IN)
(74) Representative: Kiliaridis, Constantin

(57) **Abstract**

This invention relates to an improved gasifier for converting the solid biomass to gaseous fuel through thermo-chemical conversions comprising:
- a reactor having an open top, which allows air to be drawn in from the top,
- means for feeding solid biomass to the said reactor from the top,
- air nozzles are located around one-third height of the reactor from the bottom for passing the additional air,
- the biomass is held in the reactor by means of a grate and lit,
- a self-sustained high temperature zone is maintained with the help of air supply from the top of the reactor, which supports devolatization of the biomass and partial gasification of the char and air from the air nozzles,
- the hot gas produced exits from the reactor, cooled, filtered and is used for power generation.

## Description

### FIELD OF INVENTION

This invention relates to a biomass gasifier for converting the solid biomass to gaseous fuel through thermo-chemical conversion using an open top down draft, dual air entry reactor. The gaseous fuel so generated is relatively free from undesirable ingredients like tar and particulates and can be used in an internal combustion engine for power generation. It is also used in thermal application where high quality heat is required.

### BACKGROUND

Developing societies with large distributed population in small communities-hamlets and villages depending largely on agriculture have a poor quality of life due to the non-availability of electrical energy. Quite often, the promise of the poor quality free grid electricity has led to failure of electrical equipments leading to a greater misery on the already deprived segments of the society. One alternate for this is the modem use of bio-residue converted in an efficient and environmentally benign manner to producer gas capable of being used for electricity generation. The technology based on closed top concept has been known for about fifty years and various designs were deployed in European countries during World War II. There is a perception that this process leads to generation of producer gas containing particulates and tar in excess of what engines can accept.

### PRIOR ART

Designs of gasifier for solid residues have been known for quite some time. During world war II, these devices have been extensively used, particularly with charcoal as feed stock. Designs for other solid residues have evolved from the designs for charcoal gasifiers. These have a closed top hopper with relatively small opening called throat followed by a flared section at the bottom. Air is admitted through one or more openings just above the throat. Though these gasifiers functioned satisfactorily for charcoal, the design had many limitations when other solid residues were used. Apart from tar (condensed volatile matter from the solid fuel) depositing on the engine components, efficiency is low and diesel that can be replaced when used with diesel engine is not high (~65%).

Other types of gasifiers such as updraft and cross draft gasifiers have been experimented with; but these are suitable only for thermal applications because of the excessive tar content in the gas produced.

The object of this invention is to provide an efficient gasification system for solid biomass, with appropriate designs for various power levels and to generate fuel gas, which is relatively free from undesirable ingredients such as tar and particulates.

Another object of this invention to provide technology for gasification of briquetted loose biomass to produce clean procedure gas.

The further object of this invention is to provide an efficient gas cleaning and cooling system, which ensures the quality of gas which is fit for the use in an internal combustion engine.

Yet another object of this invention is to provide gas for thermal applications in which the gas is not cooled to ambient temperature, but dust is removed to a large extent and the blower is protected from the high temperature of the gas by injection of water of the blower.

A further object of this invention is to provide a compact twin lobed burner to burn the gas leaving no traces of the unburnt fuel, so that the product gas can be used directly when clean hot gas is required.

To achieve the said objectives this invention provides an improved gasifier for converting the solid biomass to gaseous fuel through thermo-chemical conversions comprising:
- a reactor having an open top, which allows air to be drawn in from the top,
- means for feeding solid biomass to the said reactor from the top,
- air nozzles are located at about 1/3 of the reactor height from bottom for passing the additional air,
- the biomass is held in the reactor by means of a grate and lit though air nozzles,
- a self-sustained high temperature zone is maintained with the help of air from the top, which supports de-volatization of the biomass and partial gasification of the char, the gasification is complete towards the bottom of the reactor where additional air is introduced through the said air nozzles,
- the hot gas produced exits from the reactor, cooled, filtered and is used for power generation.

The said reactor is a ceramic lined reactor and consists of two sections, the lower section made of mild steel lined inside with ceramic bricks and alumina tiles and the upper section annular shell made of stainless steel coated with aluminium.

The hot gas exits through the annular portion in the upper section of the reactor after transferring the heat for drying the biomass. The cooled gas is filtered through a filter consisting of quartz bed on polymeric fiber mat, which is reusable.

The gas is sucked by the blower and supplied to the engine in a controlled manner to generate power and in the case of thermal applications the blower is protected from the high temperature of gas by injection of water to the blower.

A compact twin lobed burner is provided to burn the gas leaving no traces of the unburnt fuel so that the gas produced is used directly when clean hot gas is required.

Water sump is provided at the bottom of the reactor, if desired.

A lifting table is provided at the bottom of the reactor, if desired.

The said grate is motorized and a char chamber is provided at the bottom of the reactor for collecting charcoal.

The invention will now be described with reference to the accompanying drawings:
Fig. 1 shows a biomass gasifier of 50 Kg/hr capacity having a two part reactor shell for power generation application, according to this invention.
Fig. 2 shows a biomass gasifier of 500 Kg/hr capacity having a ceramic reactor for power generation application, according to this invention.
Fig. 3 shows a biomass gasifier of 100 kg/hr capacity having a two part reactor shell for thermal application, according to this invention.
Fig. 4 shows a biomass gasifier of 500 kg/hr capacity having ceramic reactor for thermal application, according to this invention.
Fig. 5 shows a biomass gasifier of 50 kg/hr. capacity with rotating grate for char extraction for power generation application, according to this invention.

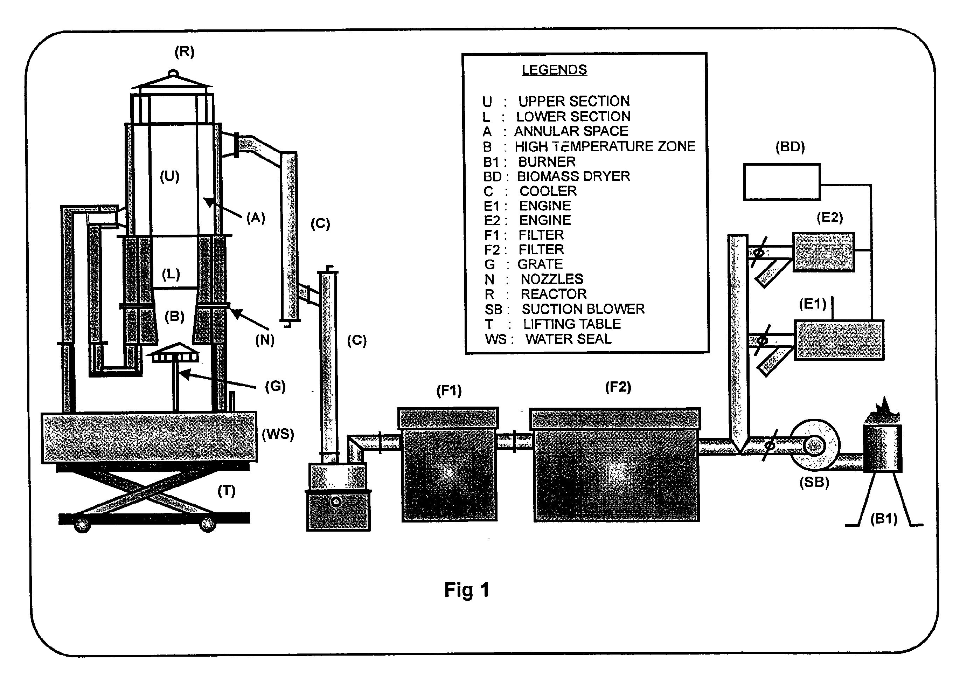

In fig 1, (R) shows the reactor having an open top, which allows air to be drawn in. The said reactor consists of two sections. The lower section (L) is made of mild steel lined inside with ceramic bricks and alumina tiles and the upper section (U) consisting of annular space (A) is made of stainless steel with aluminium coating. The biomass is fed to the reactor (R) from open top and is held in the reactor (R) by means of a grate (G). The said reactor is bottom sealed with water seal (WS) which is placed on the lifting table (T). The lifting table helps in raising and lowering of water seal. The said biomass is lit from the air nozzles (N) and a self sustained high temperature zone (B) is maintained with the help of (i) air supply from the top of the reactor, which supports devolatization of the biomass and partial gasification of the char and (ii) air from the air nozzles (N) which help in oxidation of char. The gasification is complete at the bottom of the reactor. The resultant hot gas passes through the annular portion (A) in the upper section of the reactor and helps in drying of incoming biomass. Thereafter, the said gas is passed through the cooler (C) and then filters (F1 & F2). The gas is sucked by the suction blower (SB) and is supplied to the engines (E1 & E2). The said engines (E1 & E2) generate power and the exhaust from these is used in drying biomass in biomass dryer (BD).

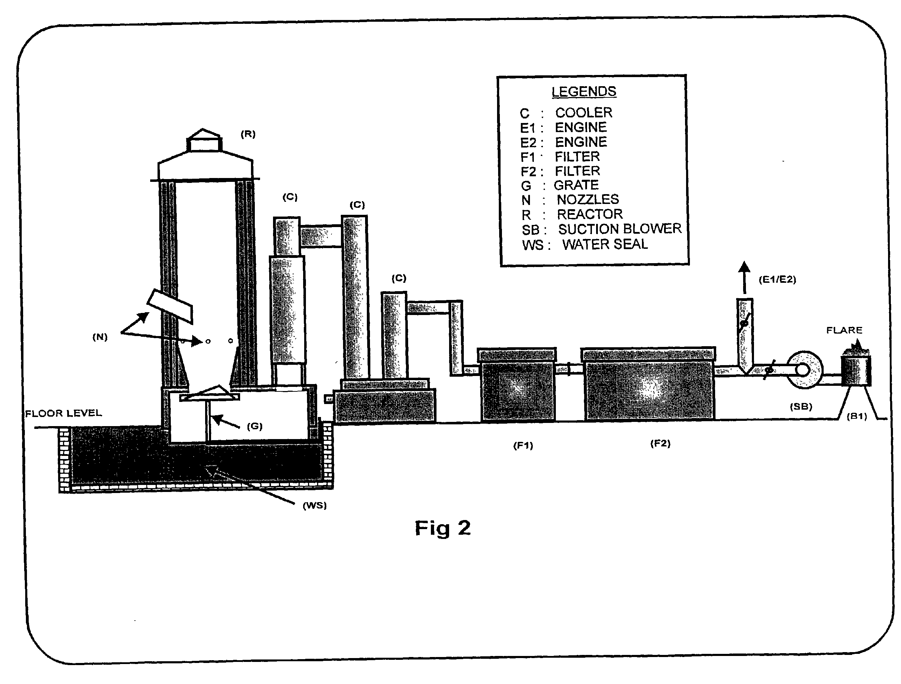

In fig 2, the reactor (R) used is a ceramic reactor having air nozzles (N) at different levels. The reactor (R) is assembled such that the bottom dips into water sump (WS). The gas generated exits through the cooler (C) and then the filters (F1 & F2) and is sucked by suction blower (SB) and is supplied to engine (E) for generation of power.

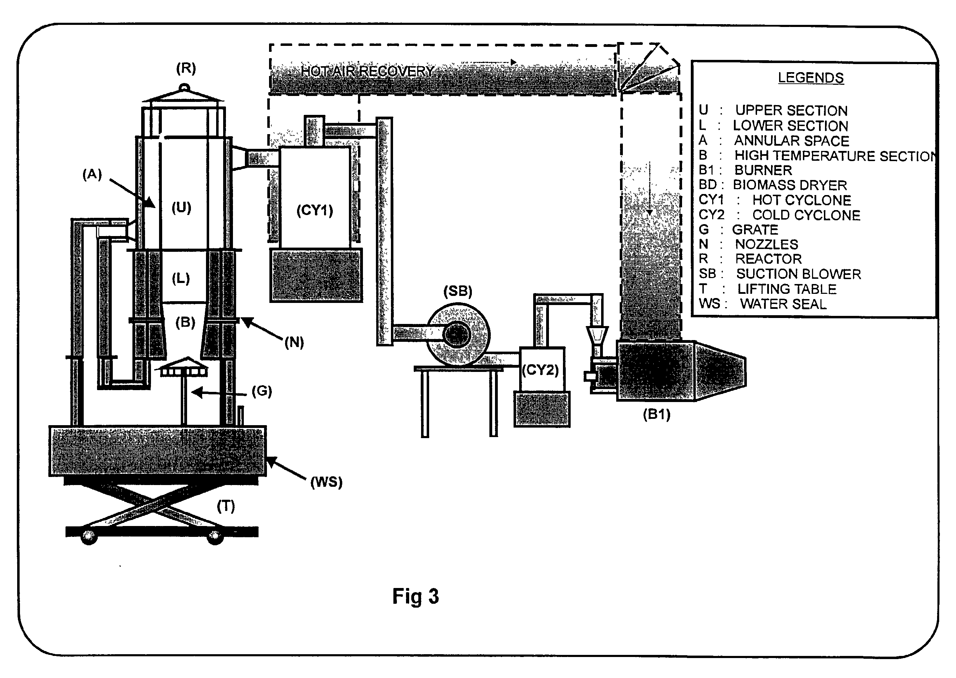

In fig 3 the reactor consisting of two sections, the upper section (U) and the lower section (L) as described above has been used with the grating (G). In this case also the gas produced passes through the annular portion (A) of the upper section (U) of the reactor to dry the incoming biomass. The gas then passes on to hot cyclone and thereafter to blower and cold cyclone and fed to the burner (B1). The burner and the hot cyclone are connected for hot air recovery, which enhances the overall efficiency.

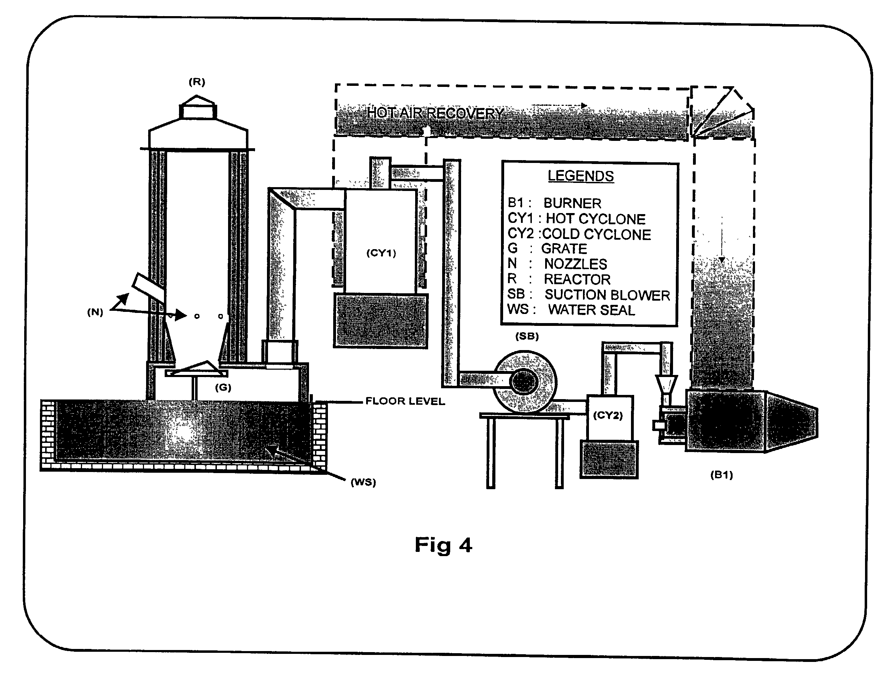

In fig 4, a ceramic lined reactor with nozzles at different levels has been used. A water sump (WS) is provided at the bottom of the reactor (R) and the gas produced is passed through hot cyclone, blower with water spray, coal cyclone and thereafter to burner. The burner and the hot cyclone are connected for hot air recovery, the said hot air recovery may be used for generating power.

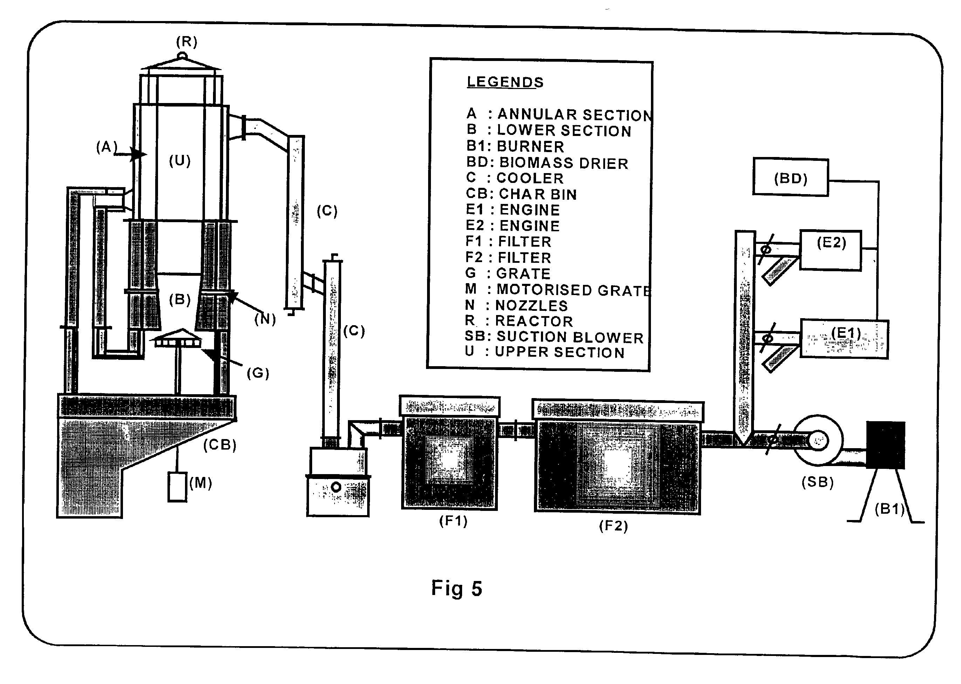

In fig. 5, two sectioned reactor is used with a grate (G). In this case, the grate used is motorized. In case char is to be collected from the biomass, a char cabin is provided at the bottom of the reactor where the char can be collected and the gas is fed to the annular portion (A) of the upper section (U) and thereafter the gas passes through the annular portion (A) to the coolers (C), filtres (F 1 & F2) and is sucked by suction blower (SB). The gas is supplied to engines (E1 & E2) for the generation of power and also to the biomass dryer (BD).

The invention will now be described with reference to the following examples:

### EXAMPLE I: A wood gasifier system of 50 kg/hr capacity for power generation application

A 50 kg/hr woody bio-residue gasifier is shown in Fig. 1. It has a two-part (U & L) reactor (R), the shell at the top (U) is made of stainless steel annular shell (A) which is aluminium coating to prevent chemical corrosion by the high temperature gas and the one at the bottom (B) made of ceramic line mild steel. Air nozzles (N) are located in the slightly conical section at the bottom of the ceramic lined part of the reactor at 0.3 to 0.4 times the diameter above the bottom of the reactor. The biomass is held in the reactor with a grate made of stainless steel or cast iron. Hot gas exits through a duct into the top annular section (A) of the stainless steel shell. The gas is then cooled by direct contact with spray of cold water and the gas then passes through a specially designed quartz bed supported on polymeric fiber mat. The gas then enters the suction of a blower (SB) or the inlet of an engine (E1 & E2) manifold into which controlled amount of air is also allowed to be drawn through a control valve. The producer gas with particulate and tar content totaling less than 100 mg/m³ replaces diesel in one or more diesel engines of total capacity of 50 kW to a tune of 85%. It uses about 1.2 kg/kWhr bio-residue with ash content less than 1% and moisture content less than 15% and consuming diesel approximately at 60 to 65 ml per kilowatt-hour.

### EXAMPLE II: Wood gasifier connected to a gas engine

The reactor (R) described in Example I is connected to a gas engine (E) of capacity 25 kVA obtained by replacing the fuel injection of the original diesel engine by an ignition system comprising of a spark plug and ignition coil/timing system. The engine could run comfortably at a compression ratio of 17 (i.e. the same as that of the original diesel engine) without any indication of engine knock. Slightly higher peak power output was obtained at a lower compression ratio (15).

### EXAMPLE III: Small Scale Gasifier

Gasifier systems similar to examples 1 and 2, but of much smaller capacity, were built and operated for power generation. A gasifier of 180 mm diameter was used for running engines (E1 & E2) of 3.7 kW capacity, both in the dual fuel mode and also by converting the engine to run entirely on gas. Experiments were also made with gas engines connected to a water pump (not shown).

### EXAMPLE IV: Gasification of briquetted material

A 75 kg/hr bio-residue gasifier similar in design to that in Example III operated with briquettes from coffee husk, briquettes of restholz (briquettes made of wastes from furniture industry from Europe), briquettes of grass, run at even as small consumption rates as 20 to 40 kg/hr run continuously for six hours with measurements of gas composition, particulates and tar at the hot as well as cold end and cooling water analysis, oxides of nitrogen in the exhaust stream of a gas burning (gas from this gasifier) boiler showed performance as follows: Tar content in the hot stream does not exceed 700 mg/m³, in the cold stream 55 mg/m³, the composition showing 18 to 21% CO, 15 to 17 % H₂, 1.5 to 3% CH₄, 12 to 15% CO₂. rest involving nitrogen and equilibrium moisture.

### EXAMPLE V: Thermal gasifier for tea drying

A 350 kg/hr gasifier of the reactor design shown in Fig. 3, but with (a) the reactor (R) enclosed in an outer metal shell through the annular space (A) of which air is drawn for drying wet bio-residues or meet any other demand of heat, and (b) the gas being taken through a cyclone around which is enclosed another shell for drawing air through the system to cool the gas and simultaneously heat the air to be used for combustion subsequently. The gas is passed through a blower into which water is sprayed to cool the gas and also remove about 95% of the dust. The gas is then burnt in a specially designed twin lobed burner which ensures complete combustion and attains a uniform product temperature of about 1100°C. A large capacity blower is allowed in a ratio of 1:8 (hot gas to cold air) to reduce the product temperature from 1100°C of about 120°C. This hot gas is used to dry tea leaves with an average moisture content of 5 to 60% and to levels around 5%. The amount of wood used for making 1kg of made tea this manner is 0.35 ± 0.03 kg. This is about one fifth to one seventh of the amount actually used in tea industries at present.

### EXAMPLE VI: Simultaneous gas and charcoal generation.

The 75 kg/hr gasifier of a design similar to that in Example I, with a facility to rotate the grate (G) manually or with an electric motor and a dump chamber below the reactor to enable collection of ash or char in a dry container with further facilities for their extraction for disposal or use. This reactor is used specially when coconut shell is used for making char which has other industrial uses also. By operating the reactor (R) in a stratification mode (closing the air nozzles (N) partially and allowing the flame to propagate upwards till it reaches the top) and discharging the char into the bottom dump, one can get high quality char of yield of 25 to 30% (char with a carbon content more than 85%). This is in addition to the producer gas available from the system. The capacity utilisation of the system is around 75% as compared without char extraction.

### EXAMPLE VII:

A 550 kg/hr bio-residue gasifier with an outer steel shell and the inner lined with brick and ceramic tile. The air nozzles (N) are located at 0.2 to 0.4 times the height of the reactor (R) from the bottom. An additional air nozzle from the side located at 0.4 to 0.6 times the height of the reactor for allowing air to be provided to the centre of the reactor, being arranged either in one to three tiers. The air entry has a water seal to enable quick and safe closure, a bottom grate (G) of stainless steel / cast steel construction with facility for moving it manually/with the help of an electric motor, the gas being taken out through a vertical duct with a surrounding duct to enable indirect cooling, this being carried out in one/two/three passes before the gas is taken through a blower or directly into a sand bed filter/two sand bed filters, the first one being made of coarse quartz sand, (1 - 2 mm size), second one made of fine sand, (200 to 700 microns size) the arrangement of the beds being made compact to enhance the total bed area in a given volume. The filter is made of metal coated with epoxy or glass fibre reinforced plastic material. The surface to volume ratio of the filter is 1.5 to 2.5 m²/m³.

It may be inferred from the above that the present invention is called twin air entry gasifier. During each stage of gasification, oxidation and reductions take place subjecting the gases to two high temperature cycles in the presence of hot char bed, thus eliminating almost all the tar from the gases.

The design has a variation depending upon the power level. At small power levels (up to 250 kg/hr) the reactor is made up in two sections. The lower section is made of mild steel lined with ceramic bricks and alumina tiles and the upper section is annular made of stainless steel coated with alumina. The hot producer gas is passed through the annular passage allowing some sensible heat in the gas to be regeneratively used for drying and initial heating of the biomass at the upper part of the reactor. At higher power levels (>250 kW) regenerative heating of biomass is not used due to limitations in the surface area for heat transfer and limited life of the stainless shell. Additional air nozzles at different heights also become necessary as power level increases.

One of these designs for the gasifier to generate electricity from dual fuel operation are upto a power level of 100 kW. On demonstration, these produced particulate and tar content in the gas at hot end upto 500 mg/m³ and 100 mg/m³ respectively. However, while at the cold end after gas cooling and cleaning it is about 70 mg/m³ and 50 mg/m³ respectively. Engine tests performed over a large number of engines both in the laboratory and in the field have demonstrated the claim of the designers that the particulate and tar content are within acceptable limits for use in reciprocating engines. When used in diesels engines in dual-fuel mode (both gas and diesel) the operation enables diesel replacement up to 85%.

## Claims

1. An improved biomass gasifier for converting the solid biomass to gaseous fuel through thermo-chemical conversions comprising:
- a reactor having an open top, which allows air to be drawn in from the top,
- means for feeding solid biomass to the said reactor from the top,
- air nozzles are located around one-third height of the reactor from the bottom for passing additional air,
- the biomass is held in the reactor by means of a grate and lit,
- a self-sustained high temperature zone is maintained with the help of air supply from the top of the reactor, which supports de-volatization of the biomass and partial gasification of the char and air from the air nozzzles.
- the hot gas produced exits from the reactor, cooled, filtered and is used for power generation.

2. An improved gasifier as claimed in claim 1 wherein the said reactor is a ceramic lined reactor.

3. An improved gasifier as claimed in claim 1 wherein the said reactor consists of two sections, the lower section is made of mild steel lined with ceramic bricks and alumina tiles and the upper section is annular made of stainless steel coated with aluminium.

4. An improved gasifier as claimed in claim I wherein the hot gas exits through the annular portion in the upper section of the reactor for drying the biomass.

5. An improved gasifier as claimed in claim 1 wherein the cooled gas is filtered through a filter consisting of quartz bed on polymeric fiber mat which is reusable.

6. An improved gasifier as claimed in claim 1 wherein the gas is sucked by the blower and supplied to the engine in a controlled manner to generate power and the blower is protected from the high temperature of gas by injection of water to the blower.

7. An improved gasifier as claimed in claim 1 wherein a compact twin lobed burner is provided to burn the gas leaving no traces of the unburned fuel so that the gas produced is used directly when clean hot gas is required.

8. An improved gasifier as claimed in claim 1 wherein water sump is provided at the bottom of the reactor.

9. An improved gasifier as claimed in claim 1 wherein a lifting table is provided at the bottom of the reactor, if desired.

10. An improved gasifier as claimed in claim 1 wherein the said grate is motorized and a char cabin is provided at the bottom of the reactor for collecting charcoal.
